# EUROPEAN PATENT APPLICATION

(11) **EP 4 501 555 A1**
(43) Date of publication of application: **05.02.2025**
(21) Application number: 23799585.7
(22) Date of filing: 11.04.2023
(51) Int. Cl.: B25J 13/08, B25J 9/16, B25J 19/02

(54) **ROBOT AND METHOD FOR CALCULATING DISTANCE TO OBJECT**

(30) Priority: 02.05.2022 KR 20220054435
(71) Applicant: Samsung Electronics Co., Ltd., Suwon-si, Gyeonggi-do 16677 (KR)
(72) Inventor: HA, Changho, Suwon-si, Gyeonggi-do 16677 (KR); KIM, Shin, Suwon-si, Gyeonggi-do 16677 (KR); YOON, Sangsik, Suwon-si, Gyeonggi-do 16677 (KR); LEE, Donghun, Suwon-si, Gyeonggi-do 16677 (KR); JUNG, Jaeyoung, Suwon-si, Gyeonggi-do 16677 (KR); JEONG, Jaeyoon, Suwon-si, Gyeonggi-do 16677 (KR)
(74) Representative: Gulde & Partner
(86) International application number: PCT/KR2023/004832
(87) International publication number: WO 2023/214702

(57) **Abstract**

A robot and a method of determining a distance to an object are provided. The robot according to an embodiment of the present disclosure includes a 2D camera, a 1D distance sensor, a driving module configured to move the robot, at least one memory configured to store one or more instructions, and at least one processor, wherein the at least one processor is configured to execute the one or more instructions stored in the memory to obtain a 2D image by controlling the 2D camera, calculate relative depths of actual regions indicated by pixels in the 2D image, based on the obtained 2D image, obtain a reference distance to a point to which a laser output from the 1D distance sensor is irradiated, determine a distance from the robot to the object in the 2D image based on the obtained reference distance and a relative depth of a reference point corresponding to the point to which the laser is irradiated among the pixels in the 2D image, and travel based on the determined distance to the object.

## Description

### Technical Field

The present disclosure relates to a robot. More specifically, the present disclosure relates to a robot for calculating a distance to an obstacle.

### Background Art

In autonomous driving of a robot, it is important for the robot to recognize surrounding objects to be able to travel while avoiding them. When the distance to an object is inaccurate, the robot may collide with the object or travel in an unintended direction.

Current robots can recognize surrounding objects through an object recognition sensor. However, there is a problem in that the distance to the object may not be accurately determined using the object recognition sensor alone.

In addition, robots that include a 3D sensor to calculate the distance to objects have been appearing, but as most 3D sensors are expensive, the robots become more expensive.

Therefore, a method is required to accurately detect a distance to surrounding objects without using an expensive 3D sensor.

### Disclosure

### Technical Solution

According to an embodiment of the present disclosure, a robot for determining a distance to an object includes a 2D camera, a 1D distance sensor, a driving module configured to move the robot, at least one memory configured to store one or more instructions, and at least one processor, wherein the at least one processor is configured to execute the one or more instructions stored in the memory to obtain a 2D image by controlling the 2D camera, calculate relative depths of actual regions indicated by pixels in the 2D image, based on the obtained 2D image, obtain a reference distance to a point to which a laser output from the 1D distance sensor is irradiated, determine a distance from the robot to an object in the 2D image based on the obtained reference distance and a relative depth of a reference point corresponding to the point to which the laser is irradiated among the pixels in the 2D image, and control the driving module to travel based on the determined distance to the object.

According to an embodiment of the present disclosure, a method, by which a robot determines a distance to an object, includes obtaining a 2D image by controlling a 2D camera, calculating relative depths of actual regions indicated by pixels in the 2D image, based on the obtained 2D image, obtaining a reference distance to a point to which a laser output from a 1D distance sensor is irradiated; determining a distance from the robot to an object in the 2D image based on the obtained reference distance and a relative depth of a reference point corresponding to the point to which the laser is irradiated among the pixels in the 2D image, and traveling based on the determined distance to the object.

In addition, according to an embodiment of the present disclosure, a computer-readable recording medium is provided on which a program for performing, on a computer, a method, by which a robot determines a distance to an object, is recorded.

### Description of Drawings

FIG. 1 illustrates a method, by which a robot determines a distance to an object, according to an embodiment of the present disclosure.
FIG. 2 illustrates a method, by which a robot determines relative depths of pixels in a 2D image by using an artificial intelligence model, according to an embodiment of the present disclosure.
FIG. 3 illustrates a method, by which a robot recognizes relative depth of objects in a 2D image and objects by using an artificial intelligence model, according to an embodiment of the present disclosure.
FIG. 4 illustrates a method, by which a robot determines a distance to a surrounding object based on a reference distance, according to an embodiment of the present disclosure.
FIG. 5 is a block diagram of a robot according to an embodiment of the present disclosure.
FIG. 6 is a flowchart of a method, by which a robot determines a distance to an object, according to an embodiment of the present disclosure.
FIG. 7 is a block diagram of a robot according to another embodiment of the present disclosure.
FIG. 8 is a flowchart of a method of correcting a reference point based on movement of a robot, according to an embodiment of the present disclosure.
FIG. 9 illustrates a method, by which a robot determines a distance to an object by using a plurality of 1D distance sensors, according to an embodiment of the present disclosure.
FIG. 10 illustrates a method, by which a robot generates a map, according to an embodiment of the present disclosure.
FIG. 11 illustrates a block diagram of a robot according to another embodiment of the present disclosure.

### Mode for Invention

In the present disclosure, the expression "at least one of a, b, or c" refers to "a", "b", "c", "a and b", "a and c", "b and c", "all of a, b, and c", or variations thereof.

Hereinafter, the present disclosure will now be described more fully with reference to the accompanying drawings, in which embodiments of the present disclosure are shown such that one of ordinary skill in the art may easily work the present disclosure. The present disclosure may, however, be embodied in many different forms and should not be construed as limited to the embodiments set forth herein. Also, elements not related to description are omitted in the drawings for clear description of the present disclosure, and like reference numerals in the drawings denote like elements throughout the specification.

The terms used in the present disclosure are described as general terms currently used in consideration of the functions mentioned in the present disclosure, but they may mean various other terms depending on the intention or precedents of those skilled in the art, the emergence of new technologies, etc. Thus, the terms used in the present disclosure should be understood not as simple names but based on the meaning of the terms and the overall description of the present disclosure.

Additionally, while such terms as "first," "second," etc., may be used to describe various elements, such elements must not be limited to the above terms. The above terms are used only to distinguish one element from another.

Additionally, the terms used in the present disclosure are merely used to describe specific embodiments and are not intended to limit the present disclosure. Singular expressions include plural meanings, unless the context clearly indicates singularity. Also, throughout the specification, it will also be understood that when an element is referred to as being "connected to" another element, it can be directly connected to the other element, or it can be electrically connected to the other element and intervening elements may be present. Also, when a part "includes" an element, unless there is a particular description contrary thereto, the part can further include other elements, not excluding the other elements.

Phrases such as `in some embodiments' or 'in an embodiment' that appear in various places in this specification do not necessarily all refer to the same embodiment.

Embodiments of the present disclosure are intended to provide a robot and a control method for determining a distance to a surrounding object without using a 3D sensor.

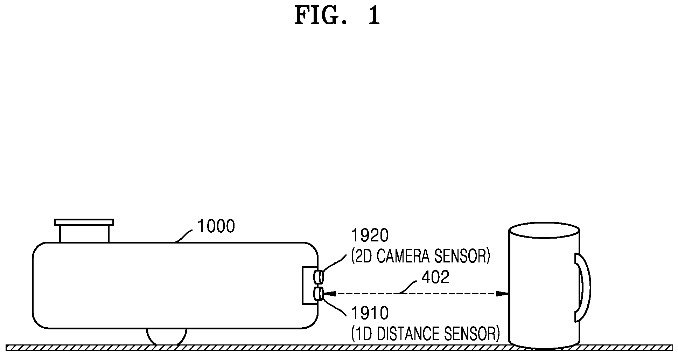

FIG. 1 illustrates a method, by which a robot determines a distance to an object, according to an embodiment of the present disclosure.

Referring to FIG. 1, a robot 1000 may determine a distance to objects around the robot 1000 by using at least one 2D camera 1920 and a 1D distance sensor 1910.

The robot 1000 according to an embodiment may estimate an actual distance from the robot 1000 to objects within a 2D image by calculating relative depths of objects in the 2D image based on the 2D image obtained using the 2D camera 1920, obtaining an actual distance to any one point in the 2D image by using the 1D distance sensor 1910, and converting the calculated relative depths of the objects into distances.

For example, the robot 1000 may control a 2D camera to obtain 2D images of objects located in front of the robot 1000. The robot 1000 may calculate relative depths of actual regions corresponding to pixels in the obtained 2D image by using an artificial intelligence model. Additionally, the robot 1000 may control the 1D distance sensor 1910 to obtain a reference distance 402 to a laser irradiation point. The robot 1000 may obtain a relative depth of a reference point corresponding to the laser irradiation point among the pixels in the 2D image. The robot 1000 may calculate a distance from the robot 1000 to objects in the 2D image based on the obtained reference distance, the relative depth of the reference point, and the relative depth between objects in the 2D image.

The robot 1000 may have a driving function. For example, the robot 1000 may recognize an obstacle located in front of the same and drive while avoiding the obstacle. In this case, the robot 1000 may recognize the type of the object in the 2D image, and when the recognized type of object is determined to be an obstacle, the robot 1000 may drive while avoiding the obstacle based on a distance to the object.

Additionally, the robot 1000 may drive to a destination based on a location of the destination in a map and a position of the robot 1000 in the map. Additionally, the robot 1000 may drive along a driving path based on a driving path in the map and its own position in the map.

The robot 1000 may correspond to various types of robots with a driving function. The robot 1000 may include, for example, a vacuum cleaner robot 1000, a mop cleaner robot 1000, a serving robot 1000, an air purifier robot 1000, a childcare robot 1000, a housekeeping robot 1000, and an industrial robot 1000, but is not limited thereto.

The 2D camera 1920 may include, but is not limited to, an RGB camera. Additionally, the 1D distance sensor 1910 may include, but is not limited to, a position sensitive device (PSD) sensor and a time of flight (TOF) sensor.

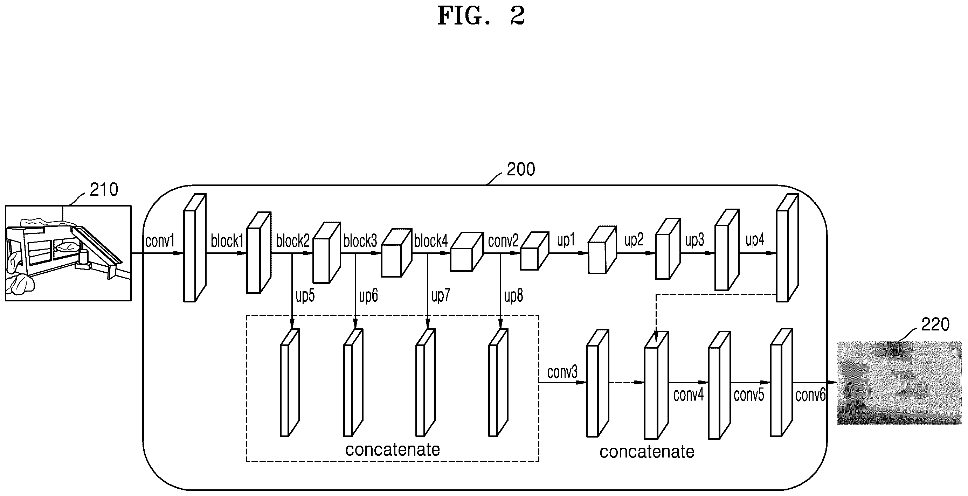

FIG. 2 illustrates a method, by which a robot determines relative depths of pixels in a 2D image by using an artificial intelligence model, according to an embodiment of the present disclosure.

Referring to FIG. 2, the robot 1000 may determine a relative depth of an actual region indicated by pixels in response to each pixel in one 2D image. A relative depth may refer to a vertical distance from a reference plane parallel to an RGB sensor plane of a 2D camera, to an actual region indicated by a pixel. The reference plane may be a virtual plane parallel to an RGB sensor plane of the 2D camera 1920. The reference plane may be predetermined and stored in the robot 1000, and may be an RGB sensor plane of a 2D camera. The artificial intelligence model may include, for example, a Pix2Pix model 200, which is a deep learning model, but is not limited thereto.

The artificial intelligence model may be trained in advance. For example, the artificial intelligence model may be trained by inputting a 2D image as input data of training data and inputting a measured depth of an actual point indicated by each pixel in the 2D image as output data of the training data.

The artificial intelligence model may be trained to calculate a distance from the reference plane of the actual point indicated by each pixel, corresponding to each pixel in the 2D image. By training the artificial intelligence model on a large number of 2D images, the artificial intelligence model may produce more accurate depth.

The artificial intelligence model may be implemented as software and stored in a memory of the robot 1000, or may be implemented as a separate processor and provided in the robot 1000. Additionally, the artificial intelligence model may be stored in a separate server (not shown).

Referring to FIG. 2, the robot 1000 may control the 2D camera 1920 to obtain a 2D image 210 representing objects in front of the robot 1000. In addition, the robot 1000 may input the obtained 2D image 210 as input data and execute the artificial intelligence model, thereby calculating a relative depth of the actual point indicated by the pixels, for each pixel in the obtained 2D image 210.

In regard to each pixel in the 2D image 210, when the relative depth of the pixel is converted into color, a depth image 220 of FIG. 2 may be generated. For example, the larger a depth value, the longer a wavelength of light may be expressed in the order of yellow and red, and the smaller the depth value, the shorter the wavelength of light may be expressed in the order of blue and purple.

Additionally, according to an embodiment, the robot 1000 may convert the depth image 220 into a 3D image based on the relative depth of each pixel.

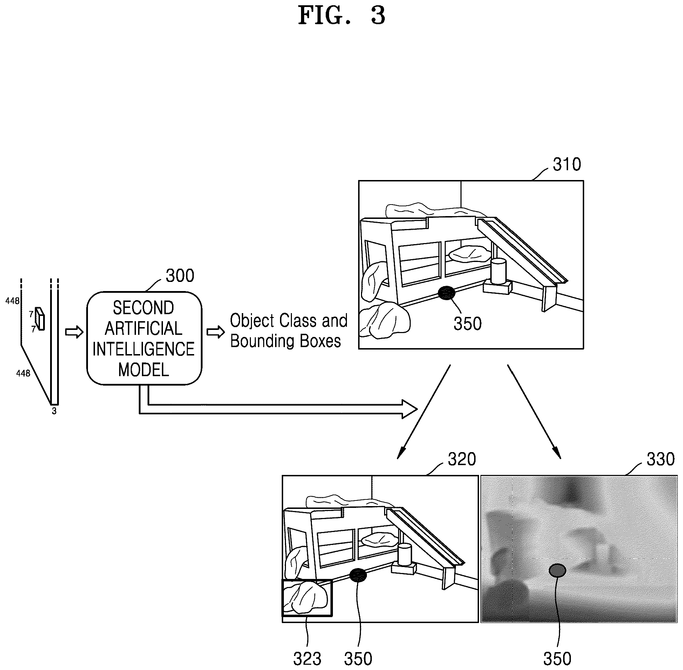

FIG. 3 illustrates a method, by which a robot recognizes relative depths of objects in a 2D image and the objects by using an artificial intelligence model, according to an embodiment of the present disclosure.

Referring to FIG. 3, the robot 1000 may obtain a 2D image 310 by controlling the 2D camera 1920. In addition, by using a first artificial intelligence model, the robot 1000 may calculate a relative depth corresponding to each pixel of the obtained 2D image 310 and generate a depth image 330 representing the calculated relative depth. The first artificial intelligence model may be the Pix2Pix model (200 in FIG. 2).

Additionally, the robot 1000 may determine a region and type of objects in the obtained 2D image 310 by using a second artificial intelligence model 300. An input into the second artificial intelligence model 300 may be one image, and the output therefrom may be an object class and a region of an object. Regions of objects within a 2D image may be expressed as bounding boxes. The second artificial intelligence model 300 may include, for example, convolutional neural network (CNN), R-CNN, You Only Look Once (YOLO), Single Shot MultiBox Detector (SSD), etc., but is not limited thereto.

The robot 1000 may use the second artificial intelligence model 300 to determine regions of objects in the 2D image by using coordinates in the image. Additionally, the robot 1000 may determine the type of a recognized object. For example, the robot 1000 may determine a region and type of an object from {105, 221, 187, 07, cloths}({x coordinate, y coordinate, width, height, type of object} with respect to a region 323 of clothes in the 2D image 310. The robot 1000 may store an image 320 showing a region of objects on the 2D image 310.

Additionally, the robot 1000 may determine relative depths of objects based on a relative depth corresponding to each pixel and the regions of the objects. For example, the robot 1000 may determine a smallest depth among relative depths corresponding to pixels within a region of an object as the relative depth of the object. For example, referring to FIG. 3, the smallest depth among the relative depths of pixels in the region 323 of clothes may be determined as the relative depth of the clothing.

Additionally, the robot 1000 may control the 1D distance sensor 1910 to obtain a distance to a laser irradiation point. For example, as laser output from the 1D distance sensor 190 is reflected and received by an object, the robot 1000 may obtain a distance to the laser irradiation point, based on a time from when the laser is output and received again and a propagation speed of the laser.

The laser irradiation point may correspond to a predetermined reference point 350 in the 2D image. A position of the reference point within the 2D image may be pre-calibrated and stored in the robot 1000 before the robot 1000 is sold. The position of the reference point within the 2D image may be determined by matching the laser irradiation point of the 1D distance sensor 1910 with the 2D image obtained through the 2D camera 1920. For example, within a 2D image, a position of a pixel representing an actual point where a laser from the 1D distance sensor 1910 is irradiated may be determined as a reference point. As positions and angles of the 1D distance sensor 1910 and the 2D camera 1920 within the robot 1000 do not change, the position of the reference point within the 2D image may also be fixed.

Additionally, the laser of the 1D distance sensor 1910 may be pre-adjusted so that an irradiation angle is perpendicular to a reference plane (e.g., the RGB sensor plane of the 2D camera 1920).

The robot 1000 may calculate a distance to objects based on a distance to the laser irradiation point, the relative depth of the reference point 350, and the relative depth between objects.

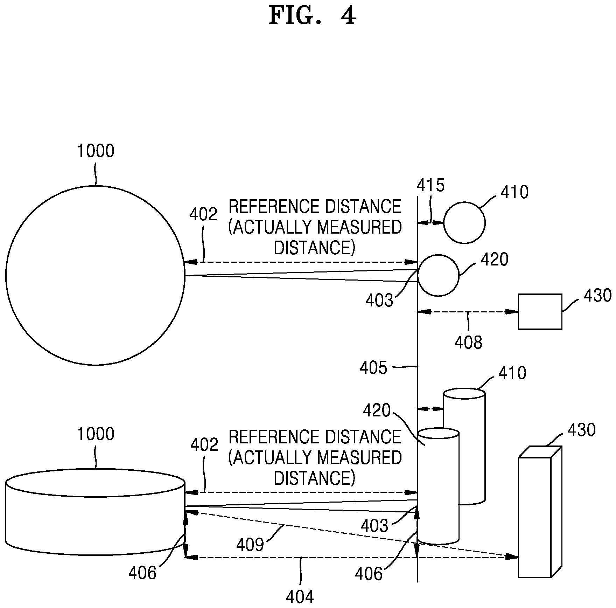

FIG. 4 illustrates a method, by which a robot determines a distance to a surrounding object based on a reference distance, according to an embodiment of the present disclosure.

Referring to FIG. 4, the robot 1000 may control the 1D distance sensor 1910 to detect a reference distance 402 to a point 403 to which a laser is irradiated. Additionally, the robot 1000 may control the 2D camera 1920 to obtain a 2D image including a first object 410, a second object 420, and a third object 430 in front of the robot 1000. The upper portion of FIG. 4 shows a top view of the robot 1000 and the objects 410, 420, and 430, and the lower portion of FIG. 4 shows a side view of the robot 1000 and the objects 410, 420, and 430.

The robot 1000 may input the obtained 2D image as an input value and execute artificial intelligence models to calculate a relative depth between the first, second, and third objects 410, 420, and 430 in the obtained 2D image. The relative depth between the first, second, and third objects 410, 420, and 430 may be a vertical distance from a reference plane 405 to the first, second, and third objects 410, 420, and 430. The reference plane 405 may be defined as one of planes parallel to a sensor plane of the 2D camera 1920 regardless of a distance from the robot 1000, but in FIG. 4, for convenience of explanation, a plane in contact with the second object 420 among the planes parallel to the sensor plane of the 2D camera 1920 is described as the reference plane 405.

The robot 1000 may determine a distance from the robot 1000 to the first, second, and third objects 410, 420, and 430 based on the reference distance 402 to the laser irradiation point 403, a relative depth of the reference point corresponding to the laser irradiation point 403 among the relative depths in the 2D image, and the relative depths among the first, second, and third objects 410, 420, and 430.

For example, the robot 1000 may determine, as a distance of a first object, a value obtained by adding the reference distance 402 to a difference between the relative depth of the reference point and a relative depth of the first object. Referring to FIG. 4, when the relative depth of the reference point corresponding to the laser irradiation point 403 is 0, the robot 1000 may determine, as a distance from the robot 1000 to the first object 410, a value obtained by adding a depth 415 of the first object 410 to the distance 402 to the laser irradiation point 403. According to an embodiment, even when the reference plane 405 is changed and the relative depth of the first object 410 is changed to a non-zero value, as a difference between the relative depth of the reference point and the relative depth of the first object 410 is not changed, a distance to the first object 410 may be calculated by adding the reference distance 402 to the difference between the relative depth of the reference point and the relative depth of the first object 410.

As another example, the robot 1000 may determine, as a base 404 of a right triangle, a value obtained by adding a difference between a relative depth 408 of the third object 430 and a relative depth of a reference point (0 in FIG. 4) to the reference distance 402, determine, as a height 406 of the right triangle, a distance between the irradiation point 403 and the third object 430 within the reference plane 405, and determine, as a distance from the robot 1000 to the first object 410, a hypotenuse distance 409 of the right triangle having the base 404 and the height 406.

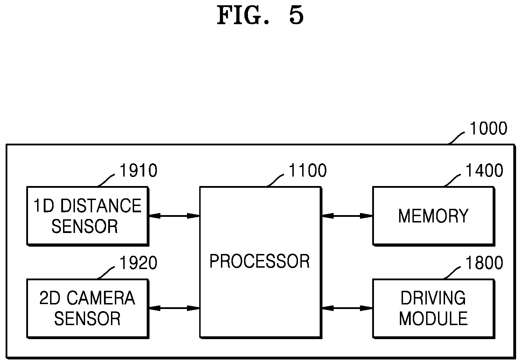

FIG. 5 is a block diagram of a robot according to an embodiment of the present disclosure.

Referring to FIG. 5, the robot 1000 may include a processor 1100, a memory 1400, a driving module 1800, a 1D distance sensor 1910, and a 2D camera 1920.

The 1D distance sensor 1910 may include a TOF sensor or a PDS sensor.

The TOF sensor may irradiate a relatively short light pulse, then detect an echo pulse that is returned when the irradiated light pulse is reflected on an object, and detect a distance from the TOF sensor to the object based on a difference between a time the light pulse was irradiated and a time the echo pulse was detected. The TOF sensor may include an emitter that emits a light pulse and a sensor that detects an echo pulse, and the emitter may irradiate a laser to a single point at a predetermined angle. The TOF sensor may be referred to as a one-dimensional direct TOF sensor.

The 2D camera 1920 may include a sensor that detects ultraviolet rays, visible rays, or infrared rays reflected from an object. When the 2D camera 1920 includes a sensor that detects visible light, the robot 1000 may obtain an RGB image from the 2D camera 1920. Additionally, when the 2D camera 1920 includes a sensor that detects infrared rays, the robot 1000 may obtain an infrared image from the 2D camera 1920.

The driving module 1800 moves a main body of the robot 1000. The driving module 1800 is driven according to a control signal set by the processor 110. The processor 1100 may set a driving path, and generate a control signal and output the control signal to the driving module 1800 such that the robot 1000 moves according to the driving path. The driving module 1800 may include a motor that rotates wheels of the robot 1000 and a timing belt installed to transmit power generated from the rear wheels to the front wheels.

The processor 1100 may typically control the overall operation of the robot 1000. The processor 1100 may control the 2D camera 1920, the 1D distance sensor 1910, and the driving module 1800 by executing programs stored in the memory 1400.

The memory 1400 may store programs for processing and control of the processor 1100. The memory 1400 may store software modules that implement artificial intelligence models. The processor 1100 may determine a distance to objects in front of thereof by executing software modules stored in the memory 1400.

Additionally, in another embodiment, software modules implementing artificial intelligence models may be stored in a server (not shown). In this case, the processor 1100 may transmit a reference distance obtained using the 1D distance sensor 1910 and a 2D image obtained using the 2D camera 1920, to the server (not shown), and transmit information about distances to objects within the 2D image from the robot 1000 from the server (not shown).

The processor 1100 may control the 2D camera 1920 to obtain a 2D image. Additionally, the processor 1100 may calculate relative depths of actual regions indicated by pixels in the 2D image, based on the obtained 2D image.

Additionally, the processor 1100 may control the 1D distance sensor 1910 to obtain a reference distance to a point to which a laser is irradiated. Additionally, the processor 1100 may determine a distance from the robot 1000 to the object in the 2D image based on the obtained reference distance and the relative depth of the reference point corresponding to the point to which the laser is irradiated among pixels in the 2D image.

Additionally, the processor 1100 may drive by controlling the driving module 1800 based on the determined distance to the object. For example, when the type of recognized object is an object that should not be approached within a certain distance, such as cups or dog feces, the processor 1100 may determine whether the distance to the determined object is within a preset distance, and may change the driving path such that the robot 1000 does not approach within the distance. Types of objects that should not be approached within a certain distance may be stored in the memory 1400 or a server (not shown), and for each type of object, an accessible distance corresponding to the type of object may be stored in advance.

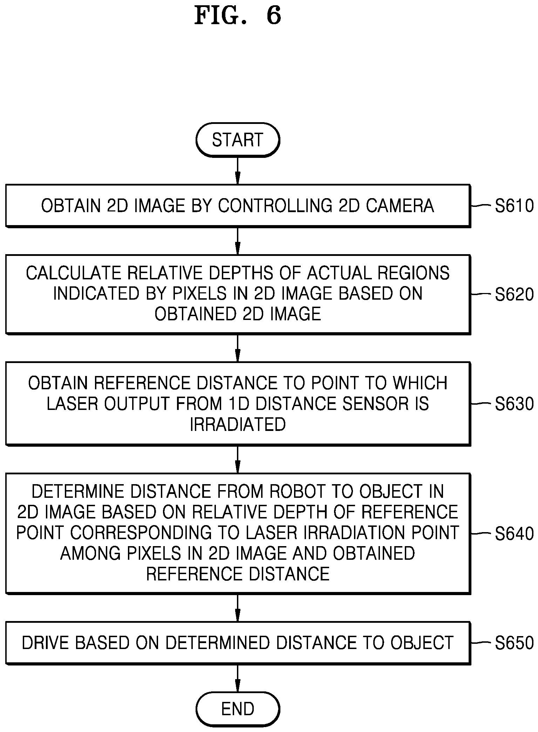

FIG. 6 is a flowchart of a method, by which a robot determines a distance to an object, according to an embodiment of the present disclosure.

In operation S610, the robot 1000 may obtain a 2D image by controlling the 2D camera 1920.

The 2D camera 1920 may include an RGB camera.

In operation S620, the robot 1000 may calculate relative depths of actual regions indicated by pixels in the 2D image based on the obtained 2D image.

In operation S630, the robot 1000 may obtain a reference distance to a point to which the laser output from the 1D distance sensor 1910 is irradiated.

The 1D distance sensor 1910 may include at least one of a PSD sensor and a TOF sensor.

Additionally, the 1D distance sensor 1910 may be arranged toward the front of the robot 1000 together with the 2D camera 1920.

Additionally, the robot 1000 may include two or more 1D distance sensors 1910.

Also, a laser may be irradiated from the 1D distance sensor 1910 perpendicularly to the RGB sensor plane of the 2D camera 1920.

In operation S640, the robot 1000 may determine a distance from the robot 1000 to an object in the 2D image based on the relative depth of the reference point corresponding to a laser irradiation point among the pixels in the 2D image and the obtained reference distance.

According to an embodiment, the robot 1000 may identify a region of an object within a 2D image. Additionally, the robot 1000 may determine the distance from the robot 1000 to the object based on relative depths of pixels within the identified region of the object, the obtained reference distance, and the relative depth of the reference point.

Additionally, according to an embodiment, the robot 1000 may identify the type of object. Types of objects may include, but are not limited to, clothes, desks, chairs, furniture, home appliances, mats, books, wires, cups, animal feces, spilled food, and spilled liquids. Additionally, the robot 1000 may generate a map indicating a position and type of the object based on the determined distance to the object and the identified type of the object. Additionally, the robot 1000 may drive based on the generated map.

Additionally, according to an embodiment, the robot 1000 may correct the position of the reference point within the 2D image based on a sensor value of a motion sensor. Additionally, the robot 1000 may determine a distance from the robot 1000 to an object in the 2D image based on a relative depth of the corrected reference point.

Additionally, according to an embodiment, the robot 1000 may calculate relative depths corresponding to pixels in the 2D image by inputting a 2D image as input data for an artificial intelligence model and executing the artificial intelligence model.

In operation S650, the robot 1000 may drive based on the determined distance to the object.

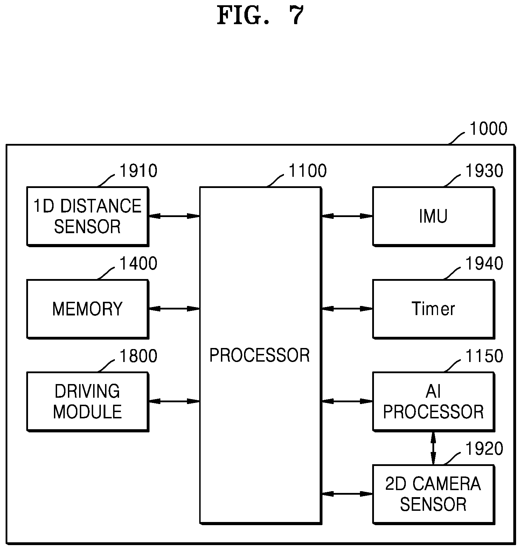

FIG. 7 is a block diagram of a robot according to another embodiment of the present disclosure.

Referring to FIG. 7, the robot 1000 may include a processor 1100, a memory 1400, a driving module 1800, a 1D distance sensor 1910, and a 2D camera 1920, as well as an inertial measurement unit (IMU) 1930, a timer 1940, and an artificial intelligence (Al) processor 1150.

The IMU 1930 may detect a speed, direction, and acceleration of the robot 1000. The IMU 1930 may include a 3-axis accelerometer sensor and a 3-axis gyroscope sensor, and may calculate the speed and attitude angle of the robot 1000 by integrating acceleration and angular velocity.

The timer 1940 may count time in hours, minutes, and seconds.

The AI processor 1150 may be manufactured as a dedicated hardware chip for artificial intelligence, or as part of an existing general-purpose processor or graphics-specific processor (e.g., graphics processing unit (GPU)). As another example, the AI processor 1150 may correspond to a neural processing unit (NPU).

The AI processor 1150 may be designed to implement an artificial intelligence model that, when a 2D image is input as input data, outputs a depth of an actual region indicated by a pixel in response to the pixel in the 2D image as output data. Additionally, the AI processor 1150 may be designed to implement an artificial intelligence model that identifies regions and types of objects in the 2D image when the 2D image is input as input data.

The processor 1100 may control the AI processor 1150 to identify regions and types of objects in the 2D image and obtain a depth of an actual region indicated by the pixel in the 2D image.

The processor 1100 may store a time at which the 2D image is obtained, based on a time counted by the timer 1940.

Additionally, the processor 1100 may store the time at which the reference distance is obtained based on the time counted by the timer 1940.

The processor 1100 may calculate distances to objects based on the 2D image obtained at identical times and the reference distance.

Additionally, the processor 1100 may control the IMU 1930 to periodically detect a distance moved and a moving angle of the robot 1000. Additionally, the processor 1100 may store the detected time corresponding to the detected distance and movement angle.

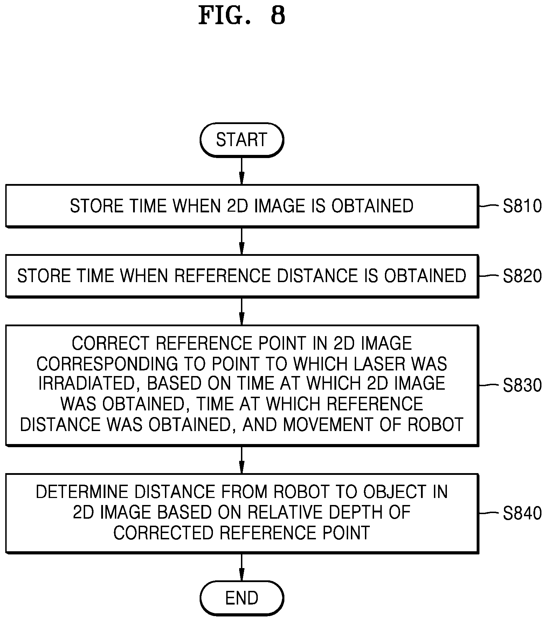

In addition, the processor 1100 may correct the position of the reference point in the 2D image based on the distance moved and the detected movement angle at which the robot 1000 moved during a difference between a time at which the 2D image was obtained and a time at which the reference distance was obtained. A method of correcting the position of the reference point is described later with reference to FIG. 8.

The processor 1100 may determine the distance from the robot 1000 to the object in the 2D image based on the relative depth of the corrected reference point.

FIG. 8 is a flowchart of a method of correcting a reference point based on movement of a robot, according to an embodiment of the present disclosure.

In operation S810, the robot 1000 may store a time when the 2D image is obtained.

The robot 1000 may store the time when the 2D image is obtained using the timer 1940. The robot 1000 may obtain 2D images at a predetermined period and store the obtained time for each periodically obtained 2D image.

In operation S820, the robot 1000 may store a time when the reference distance is obtained.

The robot 1000 may store the time when the reference distance is obtained, by using the timer 1940. The robot 1000 may detect the 2D image and the reference distance at the same time or at different times.

In operation S830, the robot 1000 may correct the reference point in the 2D image corresponding to a point to which a laser was irradiated, based on the time at which the 2D image was obtained, the time at which the reference distance was obtained, and movement of the robot 1000.

The robot 1000 may periodically detect a distance moved and a moving angle of the robot 1000 by using the IMU 1930. Additionally, the robot 1000 may store a time detected in accordance with the detected distance moved and the detected movement angle.

The robot 1000 may correct the position of the reference point in the 2D image based on the distance moved by the robot 1000 and the angle at which the robot 1000 moved, between the time the 2D image was obtained and the time the reference distance was obtained. Even when the robot 1000 has moved, the position of the reference point in the 2D image does not change, but when the difference between the time at which the reference distance was obtained and the time at which the 2D image was obtained is equal to or greater than the reference time, the point at which the reference distance was obtained may be different from an actual point indicated by the reference point in the 2D image. Therefore, as the difference between the time at which the reference distance was obtained and the time at which the 2D image was obtained is determined to be greater than or equal to the reference time, the robot 1000 may correct the position of the reference point in the 2D image based on the distance and angle by and at which the robot 1000 has moved. For example, when the robot 1000 moves to the left after the 2D image is obtained until the reference distance is obtained, the position of the reference point may be moved to the left based on the distance moved.

In operation S840, the robot 1000 may determine the distance from the robot 1000 to the object in the 2D image based on the relative depth of the corrected reference point.

Accordingly, even when the robot 1000 moves when the robot 1000 controls the 1D distance sensor 1910 and the 2D camera 1920, the distance to the object may be calculated accurately.

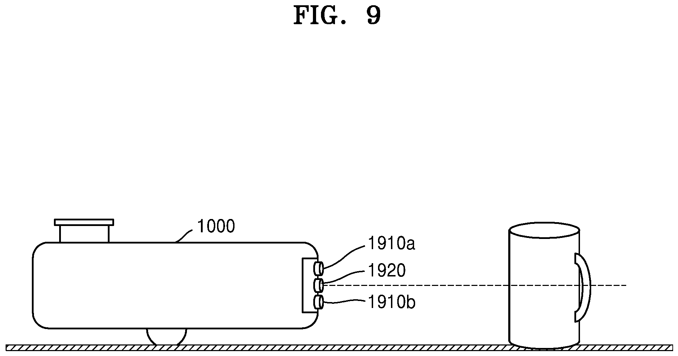

FIG. 9 illustrates a method, by which a robot determines a distance to an object by using a plurality of 1D distance sensors, according to an embodiment of the present disclosure.

Referring to FIG. 9, the robot 1000 may include a plurality of 1D distance sensors 1910. For example, the robot 1000 may include a first 1D distance sensor 1910a and a second 1D distance sensor 1910b around the 2D camera 1920.

The robot 1000 may obtain a 2D image by controlling the 2D camera 1920. Additionally, the robot 1000 may control the first 1D distance sensor 1910a and the second 1D distance sensor 1910b to detect a first distance and a second distance.

The robot 1000 may calculate the relative depth of the actual region indicated by the pixels in response to the pixels in the obtained 2D image. In addition, the robot 1000 may accurately determine a distance from the robot 1000 to objects in the 2D image based on a first relative depth at a first reference point corresponding to an irradiation point of the first 1D distance sensor 1910a and a second relative depth at a second reference point corresponding to an irradiation point of the second 1D distance sensor 1910b.

For example, the robot 1000 may correct the relative depths of pixels in the 2D image based on a ratio of the difference between the first distance and the second distance and a difference between the first relative depth and the second relative depth. After correcting the relative depths of the pixels, the robot 1000 may determine a distance from the robot 1000 to objects in the 2D image based on the relative depths of the corrected pixels.

Additionally, according to an embodiment, the robot 1000 may include three or more 1D distance sensors 1910.

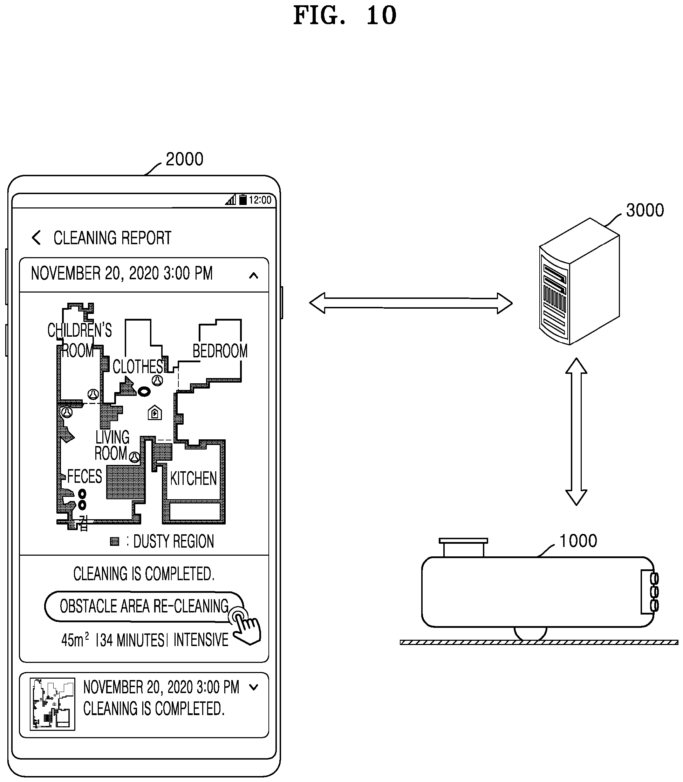

FIG. 10 illustrates a method, by which a robot generates a map, according to an embodiment of the present disclosure.

Referring to FIG. 10, the robot 1000 may generate a map indicating a position of an object based on a distance to an object and identification information of the object. The robot 1000 may travel in a predetermined driving area. The driving area may correspond to a space such as a home area, an office, or a store, for example. The robot 1000 may generate a map of the driving area and generate a driving path on the map.

The robot 1000 may calculate a position of an object in the driving area based on its own position in the driving area, its attitude angle, and the distance to the object. Additionally, the robot 1000 may identify the type of object in the 2D image.

The robot 1000 may generate a map indicating a position and type of the object on the map of the driving area based on the calculated position of the identified type of the object. Additionally, the robot 1000 may update the map based on the position and type of objects recognized in real time while driving.

According to an embodiment, the robot 1000 may communicate with a device 2000, and the device 2000 may provide information related to the operation of the robot 1000, a graphic user interface (GUI), etc. The device 2000 may provide information about the robot 1000 and store and execute a predetermined application for controlling the robot 1000. The device 2000 may communicate with the robot 1000 through a server 3000 or directly with the robot 1000 through short-distance communication. The device 2000 may correspond to, for example, a communication terminal, a mobile device, a smartphone, a tablet PC, or a wearable device.

As shown in FIG. 10, the robot 1000 may transmit the type and position of an object placed on the floor of the driving area, to the device 2000. The robot 1000 may recognize the type and position of an object in real time while driving, and transmit the type and position of the recognized object to the device 2000. As another example, after completing cleaning, the robot 1000 may transmit the recognized type and position of the object to the device 2000. As the type and position of the object are received from the robot 1000, the device 2000 may display the type and position of the object on the map of the driving area.

According to an embodiment, the robot 1000 may transmit to the device 2000 the position and type of an object that must be removed by a user among objects placed on the floor of the driving area. The types of objects that need to be removed may be previously stored in the robot 1000. For example, the types of objects that need to be removed may include feces, cups, clothes, books, food, etc. As the robot 1000 identifies the object in the 2D image as feces, the robot 1000 may store the location and identification information of the feces and transmit a map indicating the location and identification information of the feces to the device 2000.

Additionally, according to another embodiment, whether or not an object needs to be removed may be determined by the server 3000 or the device 2000. The server 3000 may be a Smart Things server or an AI server, but is not limited thereto.

Additionally, as shown in FIG. 10, the device 2000 may display a GUI guide for an object to be removed, upon receiving the location and type of the object to be removed. For example, the location and identification information of clothes, feces, and cups may be displayed as objects that must be removed, on a map representing the driving area.

Additionally, as the device 2000 receives a user input of pressing a 'obstacle area re-cleaning' button, the device 2000 may transmit an obstacle area re-cleaning request requesting the robot 1000 to re-clean the position of the object that needs to be removed. As the robot 1000 receives a request to re-clean the obstacle area, the robot 1000 may clean a region of the object again based on position information of the object to be removed and whether there is the object.

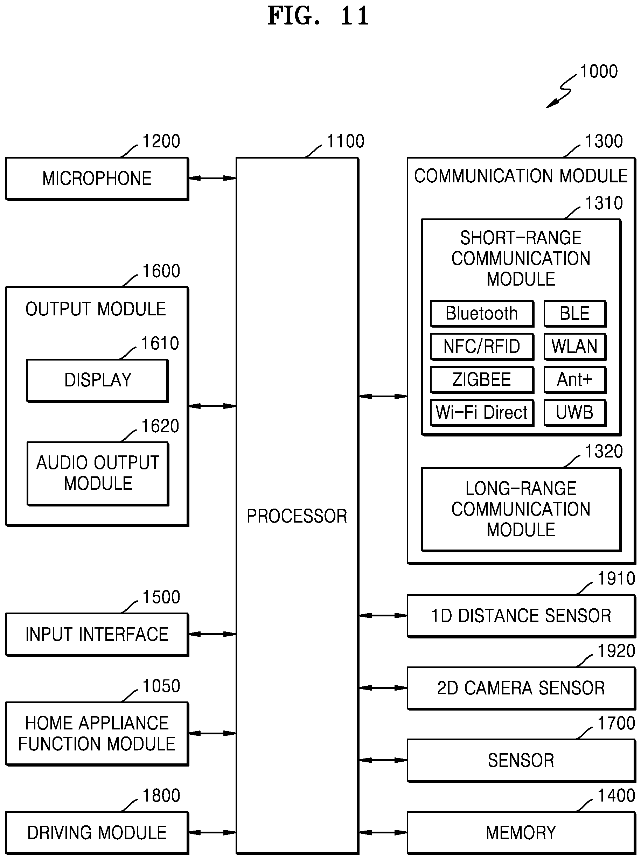

FIG. 11 illustrates a block diagram of a robot, according to another embodiment of the present disclosure.

Referring to FIG. 11, a robot 1000 may include a microphone 1200, a communication module 1300, a memory 1400, an input interface 1500, an output module 1600, a sensor 1700, a driving module 1800, a processor 1100, a 1D distance sensor 1910, and a 2D camera 1920. The same reference numerals are used for components that are the same as those illustrated in FIG. 5.

Not all of the illustrated components are essential components of the robot 1000. The robot 1000 may be implemented with more components than those shown in FIG. 11, or the robot 1000 may be implemented with fewer components than the components shown in FIG. 11.

The output module 1600 may include an audio output module 1620 and a display 1610.

The audio output module 1620 may output sound signals to the outside of the robot 1000. The audio output module 1620 may include, for example, a speaker or a receiver. A speaker may be used for general purposes such as multimedia playback or recording playback.

The display 1610 may output image data processed by an image processor (not shown) through a display panel (not shown) under the control of the processor 1100. The display panel (not shown) may include at least one of liquid crystal displays, thin film transistor-liquid crystal displays, organic light-emitting diodes, flexible displays, three-dimensional displays, and electrophoretic displays.

The input interface 1500 may receive user input for controlling the robot 1000. The input interface 1500 may receive a user input and transmit the same to the processor 1100.

The input interface 1500 may include a user input electronic device such as a touch panel that detects a touch by a user, a button for receiving a user's push operation, a wheel that receives a user's rotation operation, a keyboard, and a dome switch, but is not limited thereto.

Additionally, the input interface 1500 may include a voice recognition device. For example, the voice recognition device may be a microphone 1200, and the voice recognition device may receive a user's voice command or voice request. Accordingly, the processor 1100 may be controlled such that operation thereof corresponding to a voice command or voice request is performed.

The memory 1400 stores various information, data, instructions, programs, etc. necessary for the operation of the robot 1000. The memory 1400 may include at least one of volatile memory or non-volatile memory, and a combination thereof. The memory 1400 may include at least one type of storage medium from among a flash memory type, a hard disk type, a multimedia card micro type, a card type memory (for example, SD or XD memory, etc.), random-access memory (RAM), static random-access memory (SRAM), read-only memory (ROM), electrically erasable programmable read-only memory (EEPROM), programmable read-only memory (PROM), magnetic memory, a magnetic disk, or an optical disk. Additionally, the robot 1000 may operate a web storage or cloud server that performs a storage function on the Internet.

The communication module 1300 may transmit and receive information according to a protocol to and from an external device or an external server under the control of the processor 1100. The communication module 1300 may include at least one communication module and at least one port for transmitting and receiving data to or from an external device (not shown).

Additionally, the communication module 1300 may communicate with an external device through at least one wired or wireless communication network. The communication module 1300 may include at least one of a short-range communication module 1310 or a long-range communication module 1320, or a combination thereof. The communication module 1300 may include at least one antenna for wireless communication with other devices.

The short-range communication module 1310 may include at least one communication module (not shown) that performs communication according to communication standards such as Bluetooth, Wi-Fi, Bluetooth Low Energy (BLE), NFC/RFID, Wi-Fi Direct, UWB, or ZIGBEE. Additionally, the long-range communication module 1320 may include a communication module (not shown) that performs communication through a network for Internet communication. Additionally, the long-distance communication module 1320 may include a mobile communication module that performs communication according to communication standards such as 3G, 4G, 5G, and/or 6G.

Additionally, the communication module 1300 may include a communication module capable of receiving control commands from a remote controller (not shown) located nearby, for example, an infrared (IR) communication module.

The sensor 1700 may include various types of sensors.

The sensor 1700 may include a plurality of sensors configured to detect information about the surrounding environment around the robot 1000. For example, the sensor 1700 may include a fall prevention sensor (not shown), an ultrasonic sensor (not shown), a motion sensor (not shown), and a travel distance detection sensor (not shown), but is limited thereto. The travel distance detection sensor may include a rotation detection sensor that calculates a rotation speed of the wheels. For example, the rotation detection sensor may have an encoder installed to detect a rotation speed of a motor. As the function of each sensor may be intuitively deduced by a person skilled in the art from its name, detailed description thereof will be omitted.

The processor 1100 controls the overall operation of the robot 1000. The processor 1100 may control the components of the robot 1000 by executing a program stored in the memory 1400.

According to an embodiment, the processor 1100 may include a separate NPU that performs the operation of a machine learning model. Additionally, the processor 1100 may include a central processing unit (CPU), a graphics processor (GPU), etc.

A home appliance function module 1050 may include components used in an operation of devices that perform home appliance functions. The home appliance function module 1050 may include a suction portion, etc., but is not limited thereto. The suction portion may function to collect dust from the floor while sucking in air, and may include, but is not limited to, a rotating brush or broom, a rotating brush motor, an air intake port, a filter, a dust collection chamber, and an air outlet. The suction portion may additionally be mounted with a structure including a rotating brush that sweeps away dust from corners.

The driving module 1800 moves a main body of the robot 1000. The driving module 1800 is driven according to a control signal set by the processor 1100. The processor 1100 may set a driving path, and generate a control signal and output the control signal to the driving module 1800 such that the robot 1000 moves according to the driving path. The driving module 1800 may include two wheels installed on both sides of the front, two wheels installed on both sides of the rear, a motor that rotates and drives the two rear wheels, and a timing belt installed to transmit power generated from the rear wheels, to the front wheels, but is not limited thereto.

The 1D distance sensor 1910 may include a TOF sensor or a PDS sensor. The 1D distance sensor 1910 and the 2D camera 1920 may be described with reference to FIG. 5.

The processor 1100 may control the 2D camera 1920 to obtain a 2D image. Additionally, the processor 1100 may calculate relative depths of actual regions indicated by pixels in the 2D image based on the obtained 2D image.

Additionally, the processor 1100 may control the 1D distance sensor 1910 to obtain a reference distance to a point to which a laser is irradiated. Additionally, the processor 1100 may determine a distance from the robot 1000 to the object in the 2D image based on the obtained reference distance and the relative depth of the reference point corresponding to the point to which a laser is irradiated among pixels in the 2D image. Additionally, the processor 1100 may drive by controlling the driving module 1800 based on the determined distance to the object.

The processor 1100 may identify a region of an object within the 2D image. Additionally, the processor 1100 may determine a distance from the robot 1000 to an object based on relative depths of pixels within the identified region of the object, the obtained reference distance, and the relative depth of the reference point.

The laser of the 1D distance sensor 1910 may be provided to be irradiated from the 1D distance sensor 1910, perpendicularly to the RGB sensor plane of the 2D camera 1920. The 1D distance sensor 1910 may be arranged toward the front of the robot 1000 together with the 2D camera 1920. The 1D distance sensor 1910 may include at least one of a PSD sensor (not shown) and a TOF sensor (not shown).

The 2D camera 1920 may include an RGB camera (not shown). Additionally, the robot 1000 may include two or more 1D distance sensors 1910.

The processor 1100 may identify a region of an object and a type of the object. Additionally, the processor 1100 may generate a map indicating a position and type of the object based on the determined distance to the object and the identified type of the object. The processor 1100 may drive by controlling the driving module 1800 based on the generated map.

The processor 1100 may correct a position of the reference point within the 2D image based on a sensor value of a motion sensor (not shown). The processor 1100 may calculate relative depths corresponding to pixels in the 2D image by inputting the 2D image as input data for an artificial intelligence model and executing the artificial intelligence model.

A machine-readable storage medium may be provided in the form of a non-transitory storage medium. Here, a 'non-transitory storage medium' only refers to a tangible device and means that it does not contain signals (e.g. electromagnetic waves). This term does not distinguish between cases where data is stored semi-permanently in a storage medium and cases where data is temporarily stored in a storage medium. For example, a 'non-transitory storage medium' may include a buffer where data is temporarily stored.

According to an embodiment, methods according to various embodiments disclosed in this document may be provided and included in a computer program product. Computer program products are commodities and may be traded between sellers and buyers. A computer program product may be distributed in the form of a machine-readable storage medium (e.g. compact disc read only memory (CD-ROM)) or distributed directly or online (e.g., downloaded or uploaded) through an application store or between two user devices (e.g. smartphones). In the case of online distribution, at least a portion of the computer program product (e.g., a downloadable app) may be stored on a machine-readable storage medium, such as a memory of a manufacturer's server, an application store's server, or a relay server, or may be temporarily stored or temporarily generated.

## Claims

1. A robot (1000) comprising:
a 2D camera (1920);
a 1D distance sensor (1910);
a driving module (1800) configured to move the robot (1000);
at least one memory (1400) storing one or more instructions; and
at least one processor (1100), wherein the at least one processor (1100) is configured to execute the one or more instructions stored in the memory (1400) to:
obtain a 2D image by controlling the 2D camera (1920);
calculate relative depths of actual regions indicated by pixels in the 2D image, based on the obtained 2D image;
obtain a reference distance to a point to which a laser output from the 1D distance sensor (1910) is irradiated;
determine a distance from the robot (1000) to an object in the 2D image based on the obtained reference distance and a relative depth of a reference point corresponding to the point to which the laser is irradiated among the pixels in the 2D image; and
control the driving module (1800) to travel based on the determined distance to the object.

2. The robot of claim 1, wherein
the at least one processor
is further configured to identify a region of the object within the 2D image, and
determine the distance from the robot to the object based on relative depths of pixels within the identified region of the object, the obtained reference distance, and the relative depth of the reference point.

3. The robot of claim 1 or claim 2, wherein
the laser is emitted from the 1D distance sensor perpendicularly to a sensor plane of the 2D camera.

4. The robot of any one of claims 1 to 3, wherein
the 1D distance sensor is positioned toward the front of the robot together with the 2D camera.

5. The robot of any one of claims 1 to 4, wherein
the 1D distance sensor comprises at least one of a position sensitive device (PSD) sensor or a time of flight (TOF) sensor, and
the 2D camera comprises a color image-generating camera.

6. The robot of any one of claims 1 to 5, wherein
the robot comprises two or more 1D distance sensors, and
the at least one processor is further configured to obtain reference distances to points to which lasers output from the two or more 1D distance sensors are irradiated and determine a distance from the robot to objects within the 2D image based on relative depths of two or more reference points corresponding to the two or more 1D distance sensors and the obtained reference distances.

7. The robot of any one of claims 1 to 6, wherein
the at least one processor
is further configured to identify a type of the object,
generate a map indicating a position and type of the object, based on the determined distance to the object and the identified type of the object, and travel based on the generated map.

8. The robot of any one of claims 1 to 7, wherein
the robot further comprises a motion sensor, and
the at least one processor is further configured to correct a position of the reference point within the 2D image based on a sensor value of the motion sensor.

9. The robot of any one of claims 1 to 8, wherein
the at least one processor is further configured to input the 2D image as input data to an artificial intelligence model and execute the artificial intelligence model to calculate relative depths corresponding to the pixels in the 2D image.

10. A method, by which a robot determines a distance to an object, the method
comprising:
obtaining a 2D image by controlling a 2D camera;
calculating relative depths of actual regions indicated by pixels in the 2D image, based on the obtained 2D image;
obtaining a reference distance to a point to which a laser output from a 1D distance sensor is irradiated;
determining a distance from the robot to an object in the 2D image based on the obtained reference distance and a relative depth of a reference point corresponding to the point to which the laser is irradiated among the pixels in the 2D image; and
traveling based on the determined distance to the object.

11. The method of claim 10, wherein
the determining of the distance to the object in the 2D image comprises:
identifying a region of the object within the 2D image; and
determining the distance from the robot to the object based on relative depths of pixels within the identified region of the object, the obtained reference distance, and the relative depth of the reference point.

12. The method of claim 10 or 11, wherein
the laser is emitted from the 1D distance sensor perpendicularly to a sensor plane of the 2D camera.

13. The method of any one of claims 10 to 12, wherein
the 1D distance sensor is positioned toward the front of the robot together with the 2D camera.

14. The method of any one of claims 10 to 13, wherein
the 1D distance sensor comprises at least one of a position sensitive device (PSD) sensor or a time of flight (TOF) sensor, and
the 2D camera comprises a color image-generating camera.

15. The method of any one of claims 10 to 14, wherein
the 1D distance sensor comprises two or more 1D distance sensors, and
the obtaining of the reference distance comprises obtaining reference distances to points to which lasers output from the two or more 1D distance sensors are irradiated, and
the determining of the distance to the object in the 2D image comprises determining the distance from the robot to the object in the 2D image based on the obtained reference distances and relative depths of two or more reference points corresponding to the two or more 1D distance sensors.
